# EUROPEAN PATENT APPLICATION

(11) **EP 4 541 485 A1**
(43) Date of publication of application: **23.04.2025**
(21) Application number: 23204887.6
(22) Date of filing: 20.10.2023
(51) Int. Cl.: B22F 1/065, B22F 9/14, B33Y 70/00

(54) **SYSTEM FOR PRODUCING OF FINE SPHERICAL METALLIC POWDER WITH ELECTRIC ARC MELTING A CONSUMABLE ELECTRODE**

(71) Applicant: Siemens Aktiengesellschaft, 80333 München (DE)
(72) Inventor: Nesterenko, Dmitry, 196158 Saint Petersburg (RU); Chekin, Ilya, 236039 Kaliningrad (RU); Shvarts, Mikhail, 140105 Ramenskoe, Moskovskaya oblast' (RU)
(74) Representative: Siemens Patent Attorneys

(57) **Abstract**

It is an objective of the present invention to provide a system for producing of fine spherical metallic powder that overcomes the limitations of the existing techniques, while enabling to precisely produce a metallic powder at adjustable properties.

The general concept of the present invention is to provide a system for producing a fine spherical metallic powder, said system comprising:
a) a reaction chamber with an inert atmosphere and a consumable electrode, said consumable electrode being connected to the positive side of the power source, thus acting as an anode;
b) said reaction chamber further comprising a non-consumable electrode, being connected to the negative side of the power source thus serving as a cathode,
c) the power source being enabled to provide an electric current for the generation of an electric arc dischargeable between the electrodes for melting parts of the consumable electrode, thereby forming droplets of molten metal;
d) said reaction chamber being designed to allow an electromagnetic force and/or gravity forces to act on the metal droplets, thereby separating the metal droplets from the consumable electrode and enabling the metal droplets to acquire a spherical shape in flight under the action of surface tension and to undergo solidification; and
e) a powder collecting box for collecting the solidified metal droplets.

## Description

The present invention relates to a system for producing of fine spherical metallic powder.

Additive manufacturing (AM) gains more and more recognition in the world and in this regard, there is a growing need to produce high-quality metal powder to ensure the best performance of the resulting products. The practice of additive manufacturing shows that the best results are achieved when using powder with a high degree of sphericity, without satellites and pores.

In addition, it is important to control the fractional composition of the resulting powder so that the average particle size can be adjusted and is within a narrow range of values for higher yield. Traditionally, metal and pre-alloyed powders for additive manufacturing are produced by gas or water atomization methods and these methods still dominate the market. Both techniques are relatively simple to implement but are characterized with lower energy efficiency, in addition to the well-known drawbacks of the so-produced powder, e.g. irregular shape, low surface quality, relatively high internal porosity, relatively wide particle size distributions.

Thus, metal powders for additive manufacturing have been obtained up to now by the following methods: gas atomization, water atomization, electrode induction gas atomization, plasma atomization and plasma rotating electrode process.

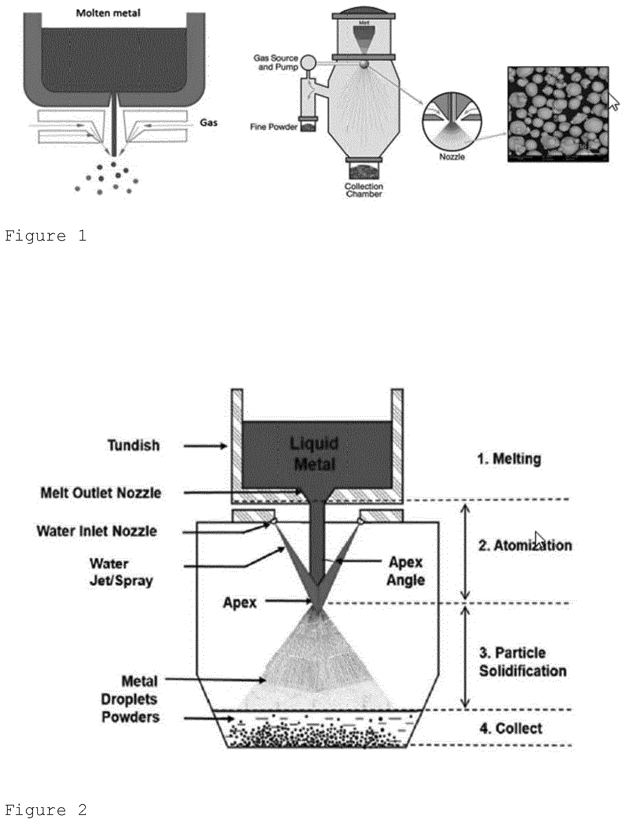

The term Gas Atomization covers a number of different techniques. Perhaps the most important variants are Air Atomization, Inert Gas Atomization (IGA) and Vacuum Inert Gas Atomization (VIGA). General principle of all these techniques is illustrated in the Figure 1.

Air Atomization is where both atomization and melting are carried out in air. Compressed air jets are used to break up the molten metal and often cooling is achieved by sucking large volumes of cooling air through the equipment. This method has been widely used since ~1900 to make tin, lead, aluminum and zinc powders, but also for some copper and copper alloys. As it would be expected, oxygen contents of air atomized powders are relatively high, typically in the range of 1000 ppm - 1%. Particle shapes range from irregular for Al, Zn to spheroidal for copper, gold and silver. Particle sizes for Ni, Fe alloys ~50-200 um, for Sn, Pb, ~10-30 um.

IGA is where the melt is broken up by inert gas, normally nitrogen or argon and thus protected from oxidation. It is used for a very wide range of alloys, ranging from Sn and Pb to Au, Ag, Cu, Co, Ni and Fe alloys. The major fields of application for this technique have been powders for thermal spraying, hard facing, brazing, dentistry and more recently hot isostatic pressing (HIP), metal injection molding (MIM) and AM. Oxygen contents can be far lower than air-atomized powders, typically in the range 100-500 ppm, but highly alloy-dependent. Particle shapes are typically spherical, but agglomeration and satelliting can occur. Median particle sizes are typically 30-200 um for Fe, Ni, Co alloys with the upper limit dictated by the large vessel sizes needed to avoid splatting of still-molten larger droplets on the walls.

VIGA is where the melting and pouring of the alloy prior to atomization is carried out in a vacuum chamber, to allow the production of the most oxidation-sensitive and reactive alloys, especially Fe-, Ni- and Co-based alloys containing Al, titanium and rare earths. This includes 'superalloys' such as IN718, maraging steels and M-Cr-Al-Y alloys. This technique was developed from the 1950s and 1960s when there was a push to explore the potential benefits of rapid solidification (RS) to allow the production of more highly alloyed superalloys for aerospace and defense applications. This proved to be a very challenging field of application but, after several decades of development, is now absorbing many thousands of tons per year of VIGA-produced superalloy powders. This intensive development has meant that the technology lends itself well to producing powders for HIP, MIM and AM. Oxygen contents in the 50-200 ppm range are achievable. Particle shape is, again, spherical with mis-shapes. Particle sizes are as for IGA.

Water atomization (WA) is a method when molten metal is broken up by high pressure water sprays, typically ranging from 3-20 MPa (see the principle in Figure 2). Melting is performed in air and atomization at first took place in an air atmosphere, resulting in very high oxygen contents for steels. Since the mid-20th century, inerting of the atomizing chamber has allowed the production of huge tonnages of Fe powder and of a wide range of alloy steels, including stainless and tool steels. It is also widely used for Au, Ag, Zn and Cu alloys and for some types of Ni and Co alloys. Oxygen contents are highly alloy-dependent ranging from 500 ppm for some self-fluxing Ni-Cr-B-Si alloys and Cu alloys to 1% for high manganese steels. Shape is generally somewhat irregular, but is greatly affected by alloy composition and atomizing conditions such that apparent densities can range from as low as 20% to ~50% of solid. Particle size for steels range from ~30 um to 1000 µm, as the rapid quench of the water jets allows larger particles to freeze quickly.

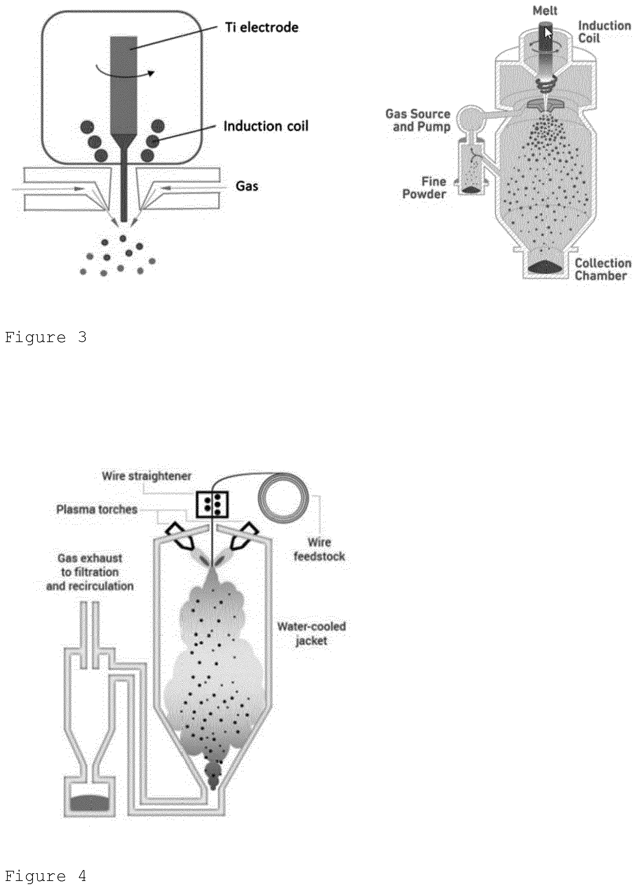

Electrode Induction Gas Atomization (EIGA) is a `ceramic-free' variant of gas atomization where the stream of melt is not provided by a tundish and nozzle (extremely difficult for Ti, which attacks all possible nozzle materials) but by drip melting an 'electrode' (or bar) which is gently rotated to even out the melting process (see Figure 3). The profiled induction coil, typically working at very high frequency (>50 kHz) to avoid excessive magnetohydrodynamic forces on the melt, melts the tip of the bar into a generally conical shape and the resulting stream of drops of molten alloy falls into a free-fall gas atomizing nozzle. The process is now widely used for Ti alloy production but suffers from the fact that the stream's location is poorly defined and the melt rate rather slow, typically 10-30 kg/h. This leads to very high (argon) gas consumption per kilogram of powder and also to a relatively coarse distribution (median 40-100 micron), so yields of fines are poor. Particle shape is fair, but with some satelliting. Purity is excellent if the system is fully vacuum engineered.

Plasma Atomization (PA) (see Figure 4) is a somewhat ambiguous term, but is generally taken to describe the process, invented by Pyrogenesis of Canada in 1995, and now widely adopted for the production of Ti and Ti alloy powders. This ceramic-free process consists of feeding a metal wire into the focus of three plasma torches, which melt and then atomize the material. The process is not inexpensive as the feedstock is high-cost Ti 'wire' (several millimeters in diameter) and the productivity is low, typically ~10 kg/h but recently claimed to have been raised to over 20 kg/h. There is now a facility in the USA with ten systems on one site to achieve substantial production. Particle shape is very spherical (due to the very low production rate and modest gas flows) and of excellent purity.

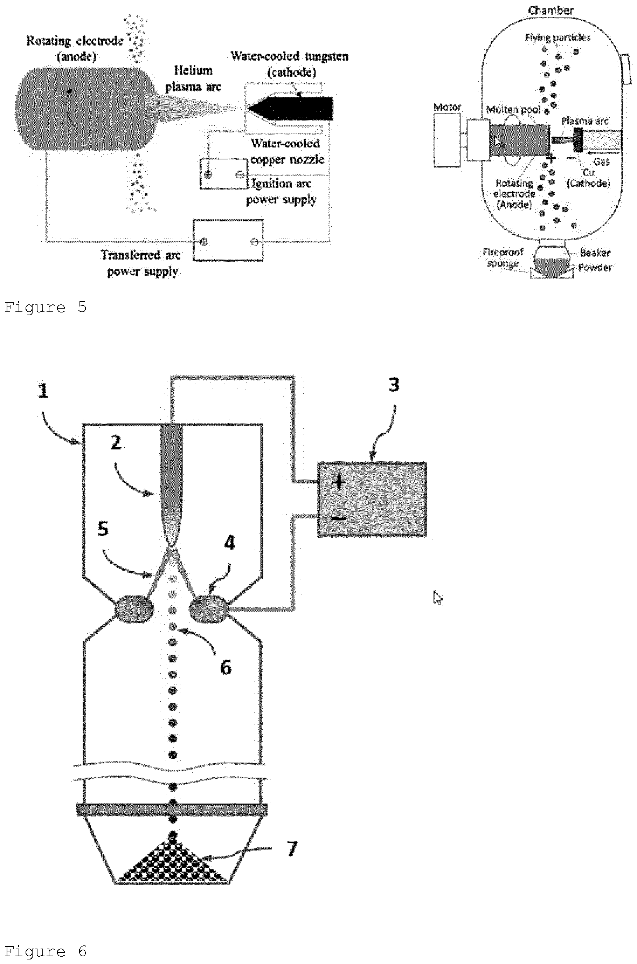

The Plasma Rotating Electrode Process (PREP) is a refinement of a powder production method called the Rotating Electrode Process (REP). In the plasma rotating electrode process, the metal electrode rod is melted by the arc plasma torch (see Figure 5). The rod (usually with diameters of 89 mm or 63.5 mm) spins at a speed 3,000 to 15,000 rpm, so the liquid melt is spun off from the electrode surface to form droplets because of centrifugal force. After that, the droplets solidify to form solid spherical particles during flight. The plasma rotating electrode process is one of the most recognized techniques for making spherical Ti alloy powders, as a result of its advantage over other production methods. First, PREP powder has high purity. As descried earlier, the liquid metal has no contact with other metals or ceramics before solidification. Also, the pickup of interstitial impurities (i.e., O, N) during the process is minimal as a result of its relatively large particle size or low specific surface area. Second, PREP powder has no or minimal gas pores because the metal droplets are produced by centrifugal forces rather than by high-pressure gas. Third, PREP powder has fewer satellite particles compared with the other productions methods using high-pressure gas. Nevertheless, PREP also has its challenges. PREP typically produces spherical powder in sizes ranging from 50 µm to 350 µm. This particle size range is too coarse for powder-bed-based additive manufacturing.

Thus, despite the existing general principles of metal powder production they do not lead to production of metal powder that is highly appreciated for use in AM technology.

Therefore, it is an objective of the present invention to provide a system for producing of fine spherical metallic powder that overcome the limitations of the aforementioned techniques, while enabling to precisely produce a metallic powder at adjustable properties.

This objective is achieved by the measures taken in accordance with the independent claims. Further advantageous embodiments are proposed by the dependent claims.

The general concept of the present invention is to provide a system for producing a fine spherical metallic powder, said system comprising:
a) a reaction chamber with an inert atmosphere and a consumable electrode, said consumable electrode being connected to the positive side of the power source, thus acting as an anode;
b) said reaction chamber further comprising a non-consumable electrode, being connected to the negative side of the power source thus serving as a cathode,
c) the power source being enabled to provide an electric current for the generation of an electric arc dischargeable between the electrodes for melting parts of the consumable electrode, thereby forming droplets of molten metal;
d) said reaction chamber being designed to allow an electromagnetic force and/or gravity forces to act on the metal droplets, thereby separating the metal droplets from the consumable electrode and enabling the metal droplets to acquire a spherical shape in flight under the action of surface tension and to undergo solidification; and
e) a powder collecting box for collecting the solidified metal droplets.

These measures provide a system that is enabled to create a powder of solidified metal particles having a fine structure and a narrow bandwidth of their distribution in size.

Preferably, the consumable electrode and/or the un-consumable electrode is/are moveable at least in a vertical direction towards each other or vice versa. This measure allows to set the correct distance that has to be overcome by the electric arc. To set the correct distance that has to be overcome by the electric arc, and maintain the continuous melting of the consumable electrode and thus powder production, a preferred embodiment of the present invention is represented by the provision of a mechanism to move the consumable electrode in a vertical direction.

Suitably, the consumable electrode may be provided in the form of a wire wherein the diameter of the wire is chosen in the dependency of the size of the metal particles to be produced.

In a preferred embodiment of the present invention, the non-consumable electrode may be provided in the form of a ring-shaped electrode, preferably made from tungsten, thus creating a dome of the electric arc allowing the melted detached metal droplet to fall down in the inner volume of this dome.

Further, the power source being enabled to adjust the magnitude of the current rate for the generation of the electric arc. The increase of the current rate leads to increase of the magnitude of the electromagnetic force thereby reducing the volume of the metal droplets.

With respect to improve the control mechanism for the resulting metal powder, the power source is configured to be operated as an inverter power source operating in a pulsed mode.

Further improvements of the control mechanism for the resulting metal powder can be realized when the power source is associated with a measurement element to read the arc voltage magnitude in real time and is configured accordingly to refine the current value through a closed-loop system.

Another measure to create an impact on the resulting metal powder can be achieved when a magnetic system, preferably in a form of a magnet coil, is introduced to create a longitudinal magnetic field which results in spinning the arc and the molten metal droplet thus discharging the arc evenly distributed along the cathode, preferably the ring cathode.

Another measure to control the properties of the resulting metal powder can be achieved when an inert gas supply system is provided and configured to provide a flow of inert gas towards a discharge zone parallel to a feed direction of the consumable electrode. The gas creates an additional detaching drag force acting on the molten metal droplets, thereby reducing the size of the detached droplets.

In another preferred embodiment of the present invention, the cathode can be provided as a rod-like non-consumable cathode, preferably made from tungsten, located on a side of a feed axis of the consumable electrode. The appliance might be equipped with a source of a transverse magnetic field, which will make the arc at the anode bend along the feed axis of the consumable electrode to ensure the consistency of the detachment direction of the separated drops and stabilizing the process.

Preferred embodiments of the present invention will be described in more detail with reference to the attached drawings (like features have like reference numbers) which depict in:
- Figure 1: schematically the general principle of gas atomization according to the prior art;
- Figure 2: schematically the general principle of water atomization according to the prior art;
- Figure 3: schematically the general principle of an Electrode Induction Gas Atomization appliance according to the prior art;
- Figure 4: schematically the general principle of a Plasma Atomization appliance according to the prior art;
- Figure 5: schematically the general principle of a Plasma Rotating Electrode Process according to the prior art;
- Figure 6: schematically an Electric Arc powder producing appliance according to the present invention
- Figure 7: schematically the forces, acting on metal droplet, in the appliance according to Figure 6;
- Figure 8: schematically the course of the current versus time in an Electric Arc powder producing appliance;
- Figure 9: Electric Arc powder producing appliance with a magnetic system;
- Figure 10: Electric Arc powder producing Appliance with inert gas supply system;
- Figure 11: Forces, acting on metal droplet, in system with inert gas supply system; and
- Figure 12: Electric Arc powder producing appliance with a rod cathode and a magnetic system.

The present invention discloses a system to produce a fine metallic powder with the help of an electric arc. One preferred embodiment of the present invention is presented in Figure 6. An appliance comprises a chamber 1 with an inert atmosphere and a vertically moving consumable electrode 2, exemplarily here in a form of a wire. The consumable electrode 2 is connected to the positive side of the power source 3, thus acting as an anode.

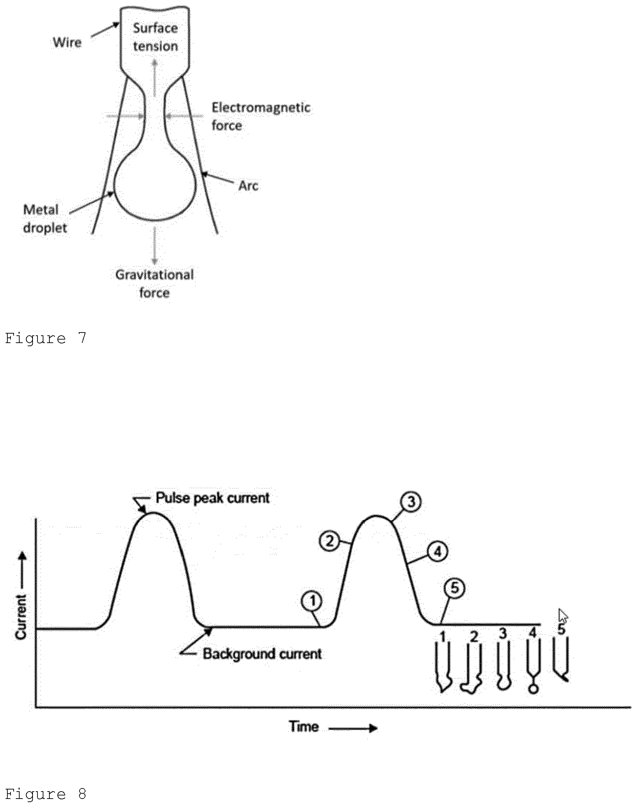

When the end of the consumable electrode 2 approaches a non-consumable electrode 4, here in Figure 6 exemplarily a ring-shaped tungsten electrode 4 which is connected to the negative side thus serving as a cathode, an electric arc 5 discharges between the electrodes 2, 4. The electric arc 5 melts the end of the consumable electrode 2, thereby forming droplets 6 of molten metal. Under the influence of electromagnetic and gravity forces that are acting on the metal droplets (see Figure 7 the relevant forces), metal droplets 6 break off the end of the consumable electrode 2 and are acquiring a spherical shape in flight under the action of surface tension. On their way down spherical droplets undergo solidification and end up in the powder collecting box 7.

By adjusting of the current rate magnitude, it is possible to regulate the magnitude of the electromagnetic force, which grows with growing value of the current rate (~I²). With an increase in the magnitude of the electromagnetic force, it is possible to reduce the volume of the droplets being detached, thereby controlling the size of the resulting powder. An inverter power source 3 is configured to operate in a pulsed mode, and by setting of the current oscillogram (see Figure 8), it is possible to control the size of the detached droplets, the frequency of their separation, and thus the productivity of the process. In addition, the arc voltage magnitude is read in real time and the current value is refined through the closed-loop system, stabilizing the arc discharge. Thus, the diameter of the resulting powder will mainly depend on the chemical composition of the powder material, the diameter of the wire and the magnitude of the current rate.

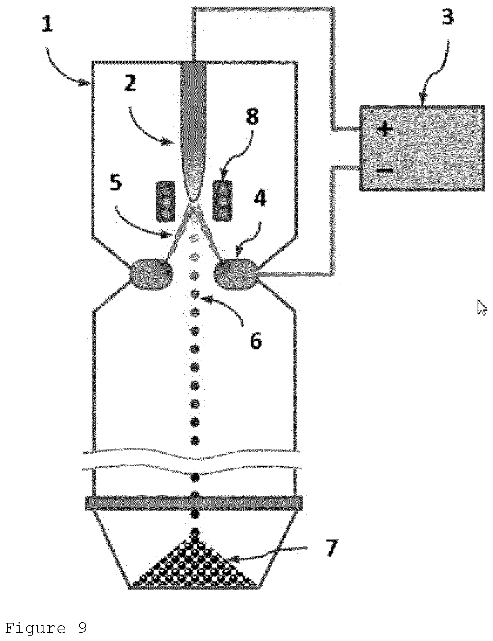

There are two options that might help to precisely control the process of molten metal droplets detachment, reduce their volume and increase the system productivity. As shown in Figure 9, a magnetic system 8 in a form of a magnet coil may be introduced to create a longitudinal magnetic field which will make the arc and the molten metal to spin thus making the arc discharges evenly distributed along the ring cathode 4, thus reducing the volume of the detached molten metal droplets due to the centripetal force.

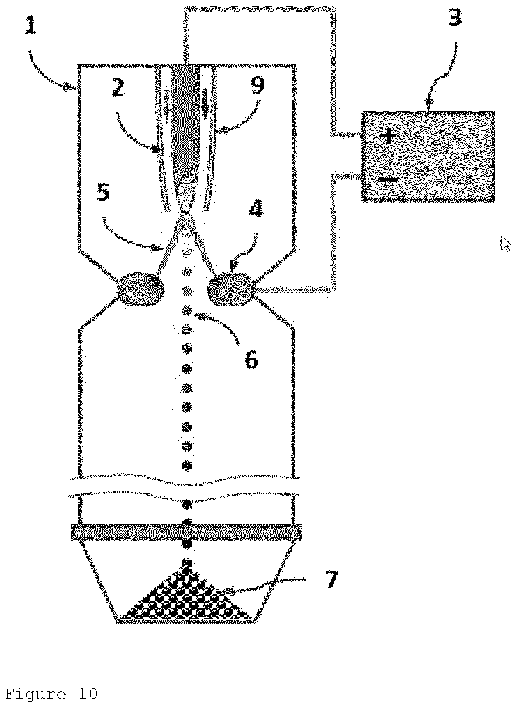

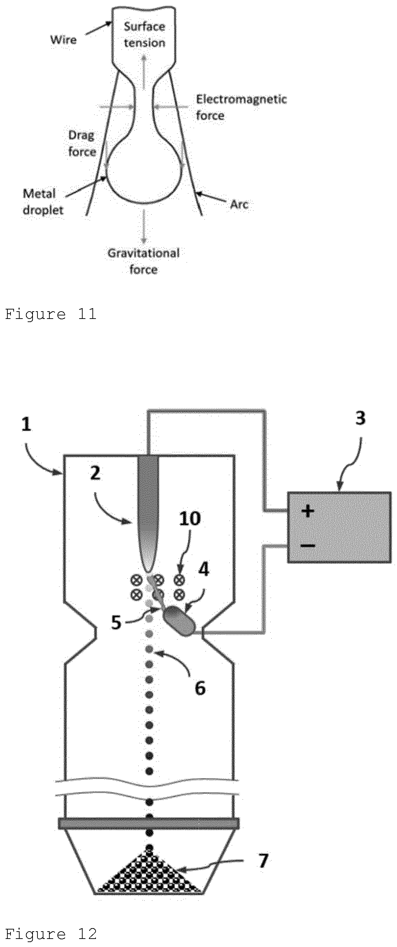

The other option (also a combination of those two options is possible) is to add an inert gas supply system 9 that will provide the flow of inert gas to the discharge zone parallel to the consumable electrode 2 feed direction which is shown in Figure 10. The gas flowing along the direction of the droplet detachment, heated by the discharge, expands, creating an additional detaching drag force (as shown in Figure 11) acting on the molten metal droplets, thereby reducing the size of the detached droplets.

A further variant of the implementation of the system with a rod-like non-consumable tungsten cathode 4 located on the side of the feed axis of the consumable electrode 2 instead of a ring-shaped electrode is shown in Figure 12. With the creation of a transverse magnetic field 10, the arc at the anode will bend along the feed axis of the consumable electrode 2 under the action of the Ampere force, thereby ensuring the consistency of the detachment direction of the separated drops and stabilizing the process.

## Claims

1. A system for producing a fine spherical metallic powder, said system comprising:
a) a reaction chamber (1) with an inert atmosphere and a consumable electrode (2), said consumable electrode (2) being preferably in the form of a rod connected to the positive side of the power source (3), thus acting as an anode, and preferably movable in a vertical direction;
b) said reaction chamber (1) further comprising a non-consumable electrode (4), preferably provided in the form of a ring with its axis coinciding with that of consumable electrode (2), and being connected to the negative side of the power source (3) thus serving as a cathode,
c) the power source (3) being enabled to provide an electric current for the generation of an electric arc (5) dischargeable between the electrodes (2, 4) for melting parts of the consumable electrode (2), thereby forming droplets (6) of molten metal;
d) said reaction chamber (1) being designed to allow an electromagnetic force and/or gravity forces to act on the metal droplets (6), thereby separating the metal droplets (6) from the consumable electrode (2) and enabling the metal droplets (6) to acquire a spherical shape in flight under the action of surface tension and to undergo solidification; and
e) a powder collecting box (7) for collecting the solidified metal droplets (6).

2. The system according to claim 1, wherein the consumable electrode (2) and/or the un-comsumable electrode (4) is/are moveable at least in a vertical direction towards each other or vice versa.

3. The system according to claim 1 or 2, wherein the consumable electrode (2) is provided in the form of a wire.

4. The system according to any of the preceding claims, wherein the power source (3) being enabled to adjust the magnitude of the current rate for the generation of the electric arc (5).

5. The system according to any of the preceding claims, wherein the power source (3) is configured to be operated as an inverter power source (3) operating in a pulsed mode.

6. The system according to any of the preceding claims, wherein the power source (3) is associated with a measurement element to read the arc voltage magnitude in real time and is configured accordingly to refine the current value through a closed-loop system.

7. The system according to any of the preceding claims, wherein a magnetic system (8), preferably in a form of a magnet coil, is introduced to create a longitudinal magnetic field which results in spinning the arc and the molten metal droplet (6) thus discharging the arc evenly distributed along the cathode (4), preferably the ring cathode (4).

8. The system according to any of the preceding claims, wherein an inert gas supply system (9) is provided and configured to provide a flow of inert gas towards a discharge zone parallel to a feed direction of the consumable electrode (2) thereby creating an additional detaching drag force acting on the molten metal droplets (6) and reducing the size of the detached droplets.

9. The system according to any of the preceding claims, wherein the cathode is provided as a rod-like non-consumable cathode (4), preferably made from tungsten, located on a side of a feed axis of the consumable electrode (2).

10. The system according to claim 8, wherein a magnetic system, creating a transverse magnetic field (10), bends the arc at the anode along the feed axis, thereby ensuring the consistency of the detachment direction of the separated drops and stabilizing the process.
